# EUROPEAN PATENT SPECIFICATION

(11) **EP 0 497 349 B1**
(45) Date of publication and mention of the grant of the patent: **12.06.1996**
(21) Application number: 92101558.2
(22) Date of filing: 30.01.1992
(51) Int. Cl.: C08L 83/04, C08K 3/22, C08K 5/54, C09D 183/04

(54) **Organosiloxane compositions exhibiting improved adhesion**
Organosiloxanzusammensetzungen mit verbesserter Haftung
Compositions d'organosiloxanes ayant une adhésion améliorée

(30) Priority: 30.01.1991 JP 56217/91
(43) Date of publication of application: 05.08.1992
(73) Proprietor: Dow Corning Toray Silicone Company, Limited, Tokyo 103 (JP)
(72) Inventor: Tanaka, Osamu, Kimitsu-gun, Chiba Prefecture (JP); Sawa, Kiyotaka, Ichihara-shi, Chiba Prefecture (JP); Sekiba, Kazuhiro, Ichihara-shi, Chiba Prefecture (JP)
(74) Representative: Spott, Gottfried, Dr.

(56) References cited:
- EP-A- 0 226 934
- EP-A- 0 245 948
- EP-A- 0 345 965

## Description

The present invention relates to organosiloxane compositions curable by a platinum-catalyzed hydrosilylation reaction. More particularly, this invention relates to curable organopolysiloxane compositions which bond strongly to plastic substrates that they are in contact with during curing.

Organosiloxane compositions that cure by a platinum-catalyzed hydrosilylation reaction cure at relatively low temperatures in a short period of time without generating by-products. The cured materials exhibit an excellent flame retardancy and electrical insulation. This combination of excellent properties has led to their application in a large number of industrial sectors. A disadvantage of many organosiloxane compositions that cure by a platinum-catalyzed hydrosilylation reaction is their inability to adhere to substrates they are in contact with them during curing.

Extensive research has been conducted on additives for improving the adhesion of these organosiloxane compositions. Examples of such additives include but are not limited to:
partial hydrolysis-condensation products of a vinyltrichlorosilane and a vinyltrialkoxysilane described in Japanese Patent Publication Number 47-36255 [36,255/72]; acryloxyalkyl-containing silanes and siloxanes described in Japanese Patent Publication Number 51-28309 [28,309/76]); organosilicon compounds containing in each molecule at least one A(R"O)₂Si group and at least one silicon-bonded lower alkenyl group or silicon-bonded hydrogen atom, where A represents an epoxy-containing monovalent hydrocarbon group and R" represents a lower alkyl radical; described in Japanese Patent Publication Number 52-48146 [48146/77]); acryloxy-or methacryloxy-terminated organopolysiloxanes described in Japanese Patent Publication Number 55-39258 [39,258/80]), and alkoxysilanes containing ethylenically unsaturated groups that are described in Japanese Patent Publication Number 56-9183 [9,183/81]).

Examples of additional adhesion promoting additives are: the combination of an epoxy compound and an organoaluminum compound described in Laid Open Japanese Patent Application [Kokai or Unexamined] Number 60-101146 [101,146/85]) and an aluminum or zirconium compound in combination with an organosilicon compound containing silicon-bonded ethylenically unsaturated and alkoxy groups described in Laid Open Japanese Patent Application Number 62-240361 [240,361/87]).

Organosiloxane compositions containing the aforementioned silanes and/or siloxanes as adhesion promoters in the absence of organometallic compounds do in fact adhere strongly to metals that they are in contact with during curing, however the adhesion of these compositions to plastic substrates, particularly polyphenylene sulfide and polycarbonate, are typically less than satisfactory.

Although this adhesion to plastics can be improved by the combination of an organometallic compound with the silane or siloxane, the strength of the cohesive bond is insufficient for some applications. Moreover, the curable organopolysiloxane composition disclosed in the aforementioned Laid Open Japanese Patent Application Number 60-101146 exhibits the additional problem of a short gelation time (pot life) at room temperature. The present inventors conducted extensive investigations in order to solve the problems associated with the adhesion to plastics of prior art organosiloxane compositions that cure by a platinum- catalyzed hydrosilylation reaction. The present invention is a result of these investigations.

One objective of the present invention is to provide curable organosiloxane compositions that develop a strong cohesive bond to plastics during curing and which do not have the disadvantage of an unduly short pot life.

The objectives of the present invention are achieved by adding to an organosiloxane composition curable by a platinum-catalyzed hydrosilylation reaction an adhesion promoter consisting essentially of a first organosilicon compound containing alkoxy groups and an ethylenically unsaturated group, a second organosilicon compound containing alkoxy groups and an epoxide-containing group and an aluminum or zirconium compound.

This invention provides an improved curable organopolysiloxane composition comprising
(A) 100 parts by weight of an organopolysiloxane containing at least 2 silicon-bonded lower alkenyl radicals in each molecule,
(B) 0.3 to 40 parts by weight of an organohydrogensiloxane containing at least 2 silicon-bonded hydrogen atoms in each molecule or a mixture of at least two of said organohydrogensiloxanes, and
(C) a quantity of a compound of a platinum group metal sufficient to promote curing of said composition.

The improvement that characterizes the present compositions comprises the presence of an adhesion promoter consisting essentially of
(D) 0.1 to 30 parts by weight of a first organosilicon compound containing both silicon-bonded ethylenically unsaturated groups and silicon-bonded alkoxy groups,
(E) 0.1 to 30 parts by weight of a second organosilicon compound containing both silicon-bonded epoxy and silicon-bonded alkoxy groups, and
(F) 0.001 to 10 weight parts aluminum compound or zirconium compound.

The ingredients of the present organosiloxane compositions will now be described in detail.

The organopolysiloxane referred to hereinafter as ingredient A is the principal ingredient of the present compositions. This ingredient should contain at least 2 silicon-bonded lower alkenyl radicals in each molecule. The composition will not cure when ingredient A contains less than 2 silicon-bonded lower alkenyl radicals in each molecule. No particular restriction is placed on the molecular structure of ingredient A, and it may be straight-chain, branched, network, or a resin. This ingredient can be a homopolymer, copolymer, or mixture thereof. The viscosity of ingredient A at 25^{o} C can range from 10 centipoise to the high viscosities associated with gums and solids.

The preferred viscosity range for ingredient A at 25o C is 50 to 100,000 centipoise. When the organopolysiloxane has a viscosity below 50 centipoise at 25o C, the cured product obtained from the organopolysiloxane composition will have diminished physical properties. The use of an organopolysiloxane with a viscosity in excess of 100,000 centipoise at 25o C results in a deterioration in the workability of the curable organopolysiloxane composition.

The silicon-bonded lower alkenyl radical in ingredient A is exemplified by but not limited to vinyl, allyl and butenyl. This alkenyl group is preferably vinyl based on the commercial availability of vinyl-containing polyorganosiloxanes. The silicon-bonded lower alkenyl radical can be present at any position in ingredient A, but are preferably present at least at the terminal positions from the standpoint of reactivity of the ingredient.

Other than the silicon-bonded lower alkenyl radicals, the silicon-bonded organic groups in component (A) will consist of one of more different monovalent hydrocarbon radicals, exclusive of lower alkenyl radicals. Examples of such hydrocarbon radicals include but are not limited to alkyl radicals such as methyl, ethyl, propyl, and butyl; cycloalkyl radicals such as cyclopentyl and cyclohexyl; aryl radicals such as phenyl and xylyl; aralkyl radicals such as phenylethyl and phenylpropyl; and haloalkyl radicals such as gamma-chloropropyl and 3,3,3-trifluoropropyl.

The terminal groups in ingredient A are exemplified by triorganosiloxy groups such as trimethylsiloxy, dimethylvinylsiloxy,
dimethylphenylsiloxy, and methylvinylphenylsiloxy); the hydroxyl group, and alkoxy groups such as methoxy, ethoxy, and butoxy. The nature of the silicon-bonded organic groups, the nature of the molecular chain end-blocking group, and the viscosity of ingredient A should be selected based on the properties required of the curable organopolysiloxane composition.

Ingredient B is a crosslinking agent which functions to cure the present compositions by a hydrosilylation reaction with ingredient A in the presence of the catalyst (ingredient C). This ingredient is an organohydrogensiloxane containing at least 2 silicon-bonded hydrogen atoms in each molecule. The organosiloxane composition will not cure when ingredient B contains fewer than 2 silicon-bonded hydrogen atoms in each molecule. No particular restriction is placed on the molecular structure of ingredient B, and it may be straight-chain, cyclic, network, or a resin. Ingredient B may be a homopolymer, copolymer, or mixture thereof. In preferred embodiments, ingredient (B) is a straight-chain or cyclic organopolysiloxane.

A particularly preferred embodiment of ingredient B when it is desired to prepare strongly self-bonding curable organosiloxane compositions is a mixture consisting essentially of from 20 to 90 weight percent of an organohydrogensiloxane (B1) containing at least 2 silicon-bonded hydrogen atoms in each molecule and no more than 0.3 weight percent of silicon-bonded hydrogen atoms, and from 10 to 80 weight percent of an organohydrogensiloxane (B2) containing at least 2 silicon-bonded hydrogen atoms in each molecule and at least 0.4 weight percent of silicon-bonded hydrogen atoms.

The viscosity of ingredient B is preferably in the range from 1 to 10,000 centipoise at 25o C. Ingredient B becomes highly volatile when its viscosity at 25o C falls below 1 centipoise. On the other hand, when the viscosity of ingredient B is greater than 10,000 centipoise at 25o C, the compound is extremely difficult to prepare on an industrial scale.

Other than silicon-bonded hydrogen atoms, ingredient B contains silicon-bonded organic groups in the form of one or more types of monovalent hydrocarbon radicals, exclusive of lower alkenyl radicals. Specific examples of ingredient B include but are not limited to the same monovalent hydrocarbon groups specified in connection with ingredient A of the present compositions. The silicon-bonded organic groups in ingredient B are preferably methyl because the resulting curable organopolysiloxane composition has excellent adhesion.

The concentration of ingredient (B) should be equivalent to from 0.5 to 5, preferably from 0.7 to 2 silicon-bonded hydrogen atoms in this ingredient for each silicon-bonded lower alkenyl radical in ingredient A. This range can typically be achieved by adding 0.3 to 40 parts by weight of ingredient B per 100 parts by weight of ingredient A.

Ingredient C is a compound of a metal from the platinum group of the periodic table which functions as a catalyst for the hydrosilylation reaction between ingredients (A) and (B). Platinum compounds useful as ingredient C include but are not limited to microparticulate forms of elemental platinum, microparticulated platinum dispersed on carbon powder, chloroplatinic acid, chloroplatinic acid-olefin coordination compounds, and chloroplatinic acid-vinylsiloxane coordination compounds.

In addition to these platinum compounds, ingredient C can be tetrakis(triphenylphosphine)palladium or a rhodium catalyst. Both of these types of compounds are known hydrosilylation reaction catalysts.

The concentration of ingredient C should be sufficient to promote the hydrosilylation reaction. Specific concentrations are typically within the range from 0.1 to 1,000 parts by weight, and preferably from 0.5 to 200 parts by weight, based on the platinum group metal present in ingredient C, for each 1,000,000 weight parts of ingredient A.

Ingredient D, an organosilicon compound having both silicon-bonded ethylenically unsaturated and alkoxy groups in each molecule, is one of the three ingredients which function in combination to impart self-adhesion to the present compositions. Evaluation of various types of adhesion promoters demonstrated that (1) a curable organosiloxane composition containing ingredients A, B, C and E (an organosilicon compound containing silicon-bonded alkoxy and epoxide groups) was not self-bonding to plastics; and (2) a curable composition containing ingredients A, B, C plus E and F (an aluminum or zirconium compound) still was not adequately self-bonding to plastics and also had a shorter room-temperature pot life than conventional curable organopolysiloxane compositions.

Only the present composition containing ingredients A through F was strongly adhered to plastics without manifesting any impairment or reduction in properties such as pot life.

Any organosilicon compound containing at least one silicon-bonded ethylenically unsaturated group and at least one silicon-bonded epoxy group can be used as ingredient D. In order for the curable organosiloxane composition to exhibit an excellent adhesion to plastics, ingredient D preferably contains at least 1 silicon-bonded unsaturated group and at least 2 silicon-bonded alkoxy groups in each molecule.

Preferred embodiments of ingredient D included but are not limited to organosilicon compounds with the following chemical formulae

1) CH₂=CHSi(OCH₃)₃

2) CH₂=CHSi(OC₂H₅)₃

3) (CH₂=CH)(CH₃)Si(OCH₃)₂

4) CH₂=CHSi(OC₂H₄OCH₃)₃

5) CH₂=CHCH₂(CH₃)Si(OC₂H₅)₂

6) CH₂=CHCH₂Si(OCH₃)₃

7) CH₂=C(CH₃)C(O)O(CH₂)₃Si(OCH₃)₃

8) CH₂=C(CH₃)C(O)O(CH₂)₃Si(CH₃)(OC₂H₅)₂

9) CH₂=CHC(O)O(CH₂)₃Si(OCH₃)₃

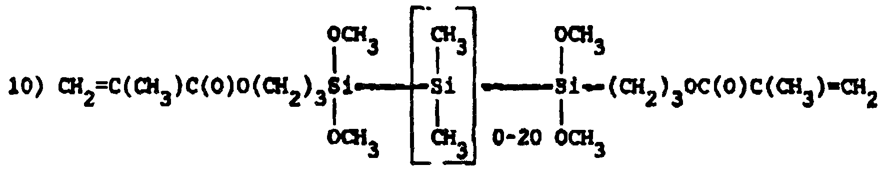

the partial hydrolysis- condensation products of one or more of the preceding compounds 1-10, and the partial hydrolysis- condensation products of one or more of the these compounds with at least one alkoxysilane that does not contain silicon-bonded ethylenically unsaturated groups. The concentration of ingredient D should be within the range of from 0.1 to 30 parts by weight, preferably from 0.5 to 10 parts by weight, per 100 parts of ingredient A.

When less than 0.1 part by weight of ingredient D per 100 parts of ingredient A is present, the resulting curable organopolysiloxane composition will not be self-bonding to plastics. The presence of more than 30 parts by weight of ingredient D will cause a deterioration in the physical properties of the cured product obtained from the curable organosiloxane composition.

Ingredient E. an organosilicon compound containing silicon-bonded epoxy and silicon-bonded alkoxy groups in each molecule, is the second of the two organosilicon compounds that imparts adhesion to plastics. The evaluation of various types of curable organopolysiloxane compositions revealed that a curable organopolysiloxane composition containing ingredients A through D was not sufficiently self-bonding for plastics. In addition, a curable organosiloxane composition containing composed of ingredients A through D plus ingredient F, an aluminum or zirconium compound, was still insufficient with respect to cohesive bonding to plastics.

In contrast to the these comparative compositions a curable organosiloxane composition containing all three ingredients of the present adhesion promoters exhibited strong cohesive bonding to plastics.

Ingredient E can be any organosilicon compound which contains at least 1 silicon-bonded epoxy group and at least 1 silicon-bonded alkoxy group in each molecule. To achieve the desired cohesive bonding to plastics ingredient E is preferably an organosilicon compound which contains at least 1 silicon-bonded epoxy group and at least 2 silicon-bonded alkoxy groups in each molecule. Preferred embodiments of ingredient E include but are not limited to compounds of the following chemical formula:

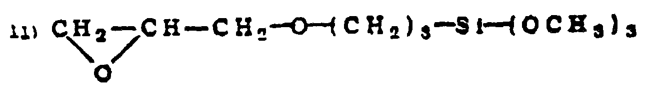

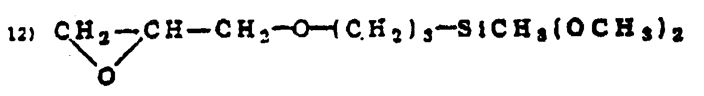

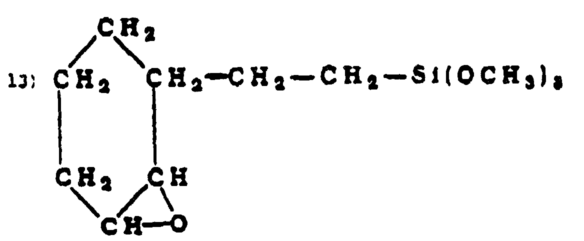

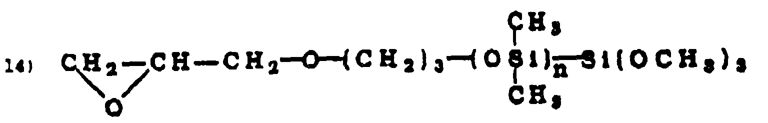

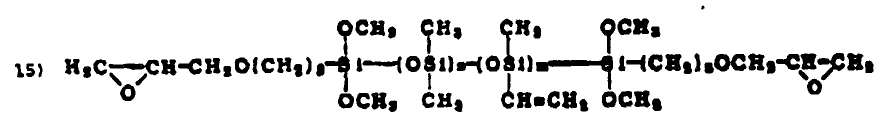

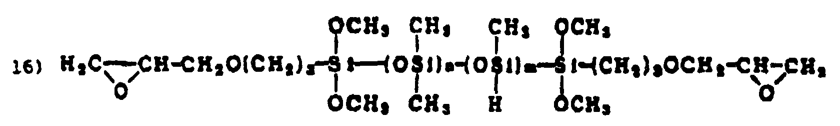

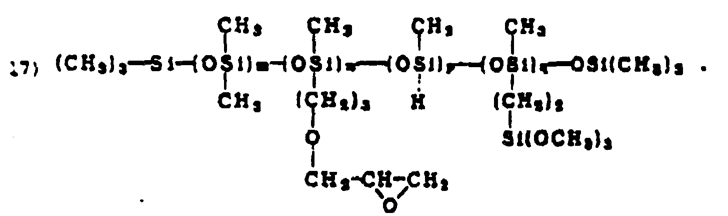

In formulae 11-17 m, n, p, and q represent zero or a positive integer. Partial hydrolysis-condensation products derived from one or more of the organosilicon compounds suitable for use as ingredient E, and the partial hydrolysis condensates of one or more of these compounds and alkoxysilane(s) not within the scope of ingredients D and E are also suitable.

The concentration of ingredient E should be from 0.1 to 30 parts by weight, preferably from 0.5 to 10 parts by weight, per 100 weight parts of ingredient A. When less than 0.1 part by weight of ingredient E is added, the curable organosiloxane composition will not be self-bonding. The addition of more than 30 weight parts of ingredient E will cause a deterioration in the physical properties of the cured product obtained from the resultant curable organopolysiloxane composition.

Ingredient F is an aluminum compound or a zirconium compound. Curable compositions containing ingredient F in addition to ingredients D and E will develop strong cohesive bonding to plastics during curing. When ingredient F is an aluminum compound it can be, for example, an alkoxide, phenoxide, or an acyloxy compound. Suitable alkoxy groups include but are not limited to methoxy, ethoxy, and isopropoxy; suitable phenoxy groups include but are not limited to phenoxy and p-methylphenoxy; and suitable acyloxy group include but are not limited to acetoxy, propionyloxy, isopropionyloxy, butyryloxy, and stearyloxy. Examples of preferred aluminum compounds are aluminum triisopropoxide, aluminum tri(tert-butoxide), aluminum triacetate, aluminum tristearate, and aluminum tribenzoate.

One or two of the alkoxy, phenoxy, or acyloxy groups of the present aluminum compounds can be replaced by an organic ligand. This organic ligand can be, for example, a beta-diketone compound or ortho-hydroxyketone compound. The beta-diketone compounds include but are not limited to the following: 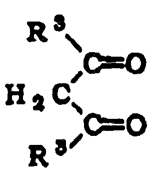 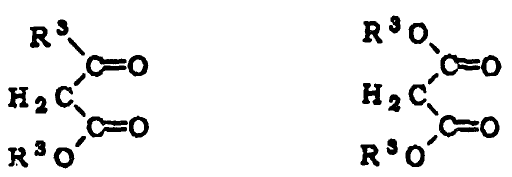 R³ of the beta-diketone represents an alkyl or haloalkyl radical.

The ortho-hydroxyketone compounds include but are not limited to the following: 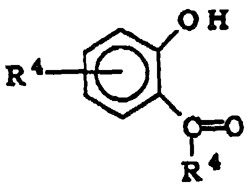 where R⁴ represents hydrogen, alkyl, haloalkyl or alkoxy.

Representative zirconium compound that can be used as ingredient F include analogs of the aforementioned aluminum compounds. Preferred zirconium compounds include but are not limited to complexes such as zirconium acetylacetonate and zirconium tetracarboxylates such as zirconium tetraacetate, zirconium tetrastearate, and zirconium tetra(2-ethylhexanoate).

The concentration of ingredient F is typically from 0.001 to 10 parts by weight, preferably from 0.01 to 5 parts by weight per 100 parts of ingredient A. When the concentration of ingredient F is loss than 0.001 weight parts per 100 parts of ingredient A, the resulting curable organopolysiloxane composition will not exhibit acceptable cohesive bonding for plastics. A concentration above 10 parts by weight of ingredient F is uneconomical. The manner in which ingredient F is added to the composition is not specifically restricted. However, when ingredient F is a solid at room temperature, it is preferred that it be dissolved in solvent for addition to the composition. The solvent used here again is not specifically restricted as long as it can dissolve ingredient F. Ingredients D and/or E can function as this solvent.

When removal of the solvent is required, the solvent is preferably a low-boiling liquid in order to facilitate solvent removal. Suitable solvents include but are not limited to ethers such as diethyl ether, dipropyl ether, methyl ethyl ether, methyl propyl ether, and ethyl propyl ether; aliphatic hydrocarbons such as pentane, hexane, heptane, octane, nonane, and decane; halogenated hydrocarbons such as chloroform and carbon tetrachloride; and aromatic hydrocarbons such as benzene, toluene, and xylene.

Ingredient F can be preliminarily reacted with ingredient D and/or E. When ingredient F is an aluminum compound the reaction mixture containing A1-O-Si bonds can then be added to the curable organosiloxane composition.

In addition to ingredients A through F the curable organosiloxane composition of the present invention can also contain a filler. Suitable fillers include but are not limited to fumed silica. hydrophobicized fumed silica, precipitated silica, hydrophobicized precipitated silica, fused silica, quartz micropowder, diatomaceous earth, talc, calcium carbonate, zinc oxide, titanium dioxide, ferric oxide, glass fiber, glass beads, glass balloons, silicon carbide, nitrogen carbide, manganese carbonate, carbon black, graphite, cerium hydroxide, and pigments. The concentration of the filler is typically from 10 to 300 weight parts per 100 weight parts of ingredient A.

The present compositions can optionally contain curing inhibitors, organic solvents, heat stabilizers, anti-ageing additives, and mold release agents.

### Examples

The invention will be explained in greater detail by means of illustrative examples that should not be interpreted as limiting the scope of the invention described in the accompanying claims. Unless otherwise indicated all parts in the examples are by weight, viscosities are measured at 25^{o} C, polyphenylene sulfide is abbreviated as PPS, and polycarbonate is abbreviated as PC. In some of the curable compositions ingredient E was an organopolysiloxane with the formula E1:

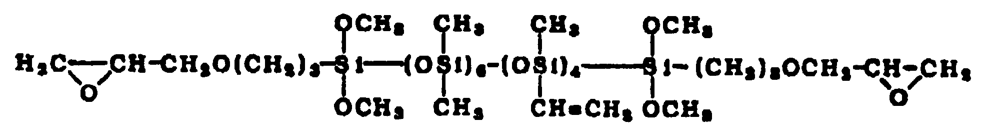

Cohesive bonding of the cured sample to the substrate was rated using the following three-level scale:
- + + =: cohesive failure (rupture in the cured organopolysiloxane rubber layer)
- + =: partial cohesive failure
- x =: interfacial delamination

### Example 1

The following ingredients were combined and blended to homogeneity to yield a curable organosiloxane composition according to the present invention:
As ingredient A, 100 parts of a dimethylvinylsiloxy-terminated dimethylpolysiloxane with viscosity of 2,000 centipoise;
   20 parts of a quartz micropowder;
As ingredient B, 3 parts of a trimethylsiloxy-terminated methylhydrogensiloxane with viscosity of 10 centipoise and containing 0.7 percent silicon-bonded hydrogen atoms;
As ingredient C, an amount of an isopropanolic chloroplatinic acid solution equivalent to 10 ppm platinum metal based on the total weight of ingredient A;
As ingredient D, 3 parts gamma-methacryloxypropyltrimethoxysilane;
1 part of ingredient E represented by formula E1, and 0.2 parts aluminum acetylacetonate or zirconium acetylacetonate as ingredient F.

These curable compositions of the present invention were placed between PPS sheets and between PC sheets and cured in a forced air convection oven at 120^{o}C for 1 hour. The adhesion characteristics of the cured products were then evaluated, and the results are reported in Table 1.

For comparison, a curable organosiloxane composition outside the scope of the present invention was prepared by blending the types and amounts of ingredients described in the preceding section of this example, with the exception that the organopolysiloxane E1 was omitted.

In a similar manner, a second comparative composition was prepared by adding 1 part of γ-glycidoxypropyltrimethoxysilane in place of both the γ-methacryloxypropyltrimethoxysilane and polyorganosiloxane E1. The adhesion properties of these curable organopolysiloxane compositions were evaluated, and these results are also reported in Table 1. The comparative composition containing γ-glycidoxypropyltrimethoxysilane began to gel immediately after being prepared, and was completely cured in several hours.

**Table 1**

| | Present Invention | | Comparative Examples | | | |
|---|---|---|---|---|---|---|
| γ-methacryloxypropropyltrimethoxysilane (parts) | 3 | 3 | 3 | 3 | 0 | 0 |
| γ-glycidoxypropyltrimethoxysilane | 0 | 0 | 0 | 0 | 1 | 1 |
| organopolysiloxane E1 | 1 | 1 | 0 | 0 | 0 | 0 |
| Al acetylacetonate (parts) | 0.2 | 0 | 0.2 | 0 | 0.2 | 0 |
| Zr acetylacetonate | 0 | 0.2 | 0 | 0.2 | 0 | 0.2 |
| Adhesion to PPS | ++ | ++ | x | x | ++ | ++ |
| Adhesion to PC | ++ | + | x | x | x | + |

### Example 2

The following ingredients were combined and blended to homogeneity to yield curable organosiloxane compositions according to the present invention: As ingredient A, 100 parts of a dimethylvinylsiloxy-terminated dimethylpolysiloxane exhibiting a viscosity of 2,000 centipoise; 20 parts quartz micropowder; As ingredient B1, 2 parts of a trimethylsiloxy-terminated polymethylhydrogensiloxane exhibiting a viscosity of 10 centipoise and a silicon-bonded hydrogen content of 0.7 weight percent; As ingredient B2, 4 parts of a trimethylsiloxy-terminated polymethylhydrogensiloxane exhibiting a viscosity of 20 centipoise and a silicon-bonded hydrogen content of 0.1 weight percent; As ingredient C, a quantity of an isopropanolic chloroplatinic acid solution equivalent to 10 ppm of platinum metal based on the total weight of ingredient A; As ingredient D, 3 parts gamma-methacryloxypropyl- trimethoxysilane, As ingredient E, 1 part of organopolysiloxane E1; and As ingredient F, 0.2 parts aluminum acetylacetonate or zirconium acetylacetonate.

These compositions were placed between PPS sheets and between PC sheets and cured in a forced convection oven at 120^{o} C for 1 hour. The adhesion characteristics of the cured products were then evaluated, and the results are reported in Table 2.

For purposes of comparison, curable organosiloxane compositions outside the scope of the present invention were prepared using the same types and amounts of ingredients specified in the first part of this example, with the exception that organopolysiloxane E1 was omitted from the composition.

A second comparative composition was prepared by substituting 1 part of γ-glycidoxypropyltrimethoxysilane in place of both the γ-methacryloxypropyltrimethoxysilane and organopolysiloxane E1. The adhesion characteristics of these curable organopolysiloxane compositions were evaluated as in Example 1, and these results are also reported in Table 2.

The comparative organopolysiloxane composition containing γ-glycidoxypropylerimethoxysilane began to gel immediately after preparation and cured in several hours.

**Table 2**

| | Present Invention | | Comparison Examples | | | |
|---|---|---|---|---|---|---|
| γ-methacryloxypropyltrimethoxysilane | 3 | 3 | 3 | 3 | 0 | 0 |
| γ-glycidoxypropyltrimethoxysilane | 0 | 0 | 0 | 0 | 1 | 1 |
| organopolysiloxane E1 | 1 | 1 | 0 | 0 | 0 | 0 |
| Al Acetylacetonate | 0.2 | 0 | 0.2 | 0 | 0.2 | 0 |
| Zr Acetylacetonate | 0 | 0.2 | 0 | 0.2 | 0 | 0.2 |
| Adhesion to PPS | ++ | ++ | + | x | ++ | ++ |
| Adhesion to PC | ++ | ++ | x | x | x | x |

### Example 3

75 Parts of a dimethylvinylsiloxy-terminated dimethylpolysiloxane exhibiting a viscosity of 20,000 centipoise was mixed with 25 parts of a copolymer consisting essentially of SiO₂ units, Mee₃SiO_{1/2} units, and Me₂ViSiO_{1/2} units and containing 2 weight percent of silicon-bonded vinyl radicals to yield a liquid mixture (ingredient A). Curable organopolysiloxane compositions of this invention were prepared by adding the following ingredients to this liquid mixture with blending to homogeneity:
35 parts quartz micropowder; As ingredient B, 6 parts of a trimethylsiloxy-terminated polymethylhydrogensiloxane exhibiting a viscosity of 10 centipoise and a silicon-bonded hydrogen content of 0.7 weight; As ingredient C, a quantity of an isopropanolic chloroplatinic acid solution equivalent to 10 ppm of platinum metal based on the total weight of ingredient A; As ingredient D, 3 parts of γ-methacryloxypropyltrimethoxysilane; As ingredient E, 1 part of γ-glycidoxypropyltrimethoxysilane or organopolysiloxane E1; and As ingredient F, 0.05 part of aluminum acetylacetonate or zirconium acetylacetonate.

These compositions were placed between PPS sheets or between PC sheets and cured in a forced convection oven at 120^{o} C for 1 hour. The adhesion characteristics of the cured products were then evaluated, and the results obtained are reported in Table 3.

For comparative purposes curable organosiloxane compositions outside the scope of the present invention were prepared using the same types and amounts of ingredients listed in the preceding section of this example with the exception that the γ-glycidoxypropyltrimethoxysilane and organopolysiloxane E1 were omitted.

The adhesion characteristics of all the curable organosiloxane compositions were evaluated as described in Example 1, and these results are also reported in Table 3.

**Table 3**

| | Present Invention | | | | Comparative Compositions | |
|---|---|---|---|---|---|---|
| γ-methacryloxypropyltrimethoxysilane | 3 | 3 | 3 | 3 | 3 | 3 |
| γ-glycidoxypropyltrimethoxysilane | 1 | 1 | 0 | 0 | 0 | 0 |
| Organopolysiloxane E1 | 0 | 0 | 1 | 1 | 0 | 0 |
| Al Acetylacetonate | 0.05 | 0 | 0.05 | 0 | 0.05 | 0 |
| Zr Acetylacetonate | 0 | 0.05 | 0 | 0.05 | 0 | 0.05 |
| Adhesion to PPS | ++ | ++ | ++ | ++ | x | x |
| Adhesion to PC | + | + | + | x | x | x |

### Example 4

75 Parts of a dimethylvinylsiloxy-terminated dimethylpolysiloxane exhibiting a viscosity of 20,000 centipoise was mixed with 25 parts of a copolymer consisting essentially of SiO₂ units, Me₃SiO_{1/2} units, and Me₂ViSiO_{1/2} units and containing 2 weight percent of silicon-bonded vinyl radicals to yield a liquid mixture. Curable organosiloxane compositions of this invention were prepared by adding the following ingredients to this liquid mixture with blending to homogeneity: 35 parts quartz micropowder; As ingredient B1, 3 parts of a trimethylsiloxy-terminated methylhydrogenpolysiloxane exhibiting a viscosity of 10 centipoise and a silicon-bonded hydrogen content of 0.7 weight percent; As ingredient B2, 8 parts of a trimethylsiloxy-teminated methylhydrogensiloxane exhibiting a viscosity of 20 centipoise and a silicon-bonded hydrogen content of 0.1 weight percent; As ingredient C, a quantity of an isopropanolic chloroplatinic acid solution equivalent to 10 ppm of platinum metal based on the total weight of the dimethylpolysiloxane, As ingredient D, 3 parts of gamma-methacryloxypropyl- trimethoxysilane,
As ingredient E, 1 part gamma-glycidoxypropyltrimethoxysilane or organopolysiloxane E1; and and as ingredient F, 0.05 parts aluminum acetylacetonate or zirconium acetylacetonate.

These compositions were placed between PPS sheets or between PC sheets and cured in a forced convection oven at 120 degrees C for 1 hour. The adhesion characteristics of the cured products were then evaluated, and the results are reported in Table 4.

For purposes of comparison, curable organosiloxane compositions outside the scope of the present invention were prepared using the same types and amounts of ingredients, but omitting the γ-glycidoxypropyltrimethoxysilane or organopolysiloxane E1 from the curable organosiloxane compositions. The adhesion characteristics of these curable organopolysiloxane compositions were evaluated as in Example 4, and these results are also reported in Table 4.

**Table 4**

| | present invention | | | | comparison compositions | |
|---|---|---|---|---|---|---|
| γ-methacryloxypropyltrimethoxysilane (parts) | 3 | 3 | 3 | 3 | 3 | 3 |
| γ-glycidoxypropyltrimethoxysilane (parts) | 1 | 1 | 0 | 0 | 0 | 0 |
| Organopolysiloxane E1 (Parts) | 0 | 0 | 1 | 1 | 0 | 0 |
| Al acetylacetonate (Parts) | 0.05 | 0 | 0.05 | 0 | 0.05 | 0 |
| Zr acetylacetonate (Parts) | 0 | 0.05 | 0 | 0.05 | 0 | 0.05 |
| Adhesion to PPS | ++ | ++ | ++ | ++ | x | x |
| Adhesion to PC | ++ | ++ | ++ | x | x | x |

## Claims

1. An organosiloxane composition comprising
(A) 100 weight parts organopolysiloxane having at least 2 silicon-bonded lower alkenyl groups in each molecule,
(B) from 0.3 to 40 parts by weight of an organohydrogensiloxane containing at least 2 silicon-bonded hydrogen atoms in each molecule or a mixture of at least two of said organohydrogensiloxanes, and
(C) a quantity of a platinum-type compound sufficient to promote curing of said composition;
and as an adhesion promoter, a mixture consisting essentially of
(D) from 0.1 to 30 parts by weight of a first organosilicon compound containing both silicon-bonded unsaturated and silicon-bonded alkoxy groups in each molecule,
(E) from 0.1 to 30 parts by weight of a second organosilicon compound containing both silicon-bonded epoxy and silicon-bonded alkoxy groups in each molecule, and
(F) from 0.001 to 10 parts by weight of an aluminum compound or a zirconium compound selected from alkoxides, phenoxides and acyloxy compounds of aluminum or zirconium, wherein one or two of the alkoxy, phenoxy or acyloxy groups of the aluminum compounds can be replaced by an organic ligand.

## Patentansprüche

1. Organosiloxanzusammensetzung umfassend
(A) 100 Gewichtsteile eines Organopolysiloxans mit mindestens zwei siliciumgebundenen Niedrigalkenylgruppen in jedem Molekül,
(B) 0,3 bis 40 Gewichtsteile eines Organohydrogensiloxans mit mindestens zwei siliciumgebundenen Wasserstoffatomen in jedem Molekül oder eine Mischung von mindestens zwei dieser Organohydrogensiloxane und
(C) eine Menge einer platinartigen Verbindung, die ausreicht, um das Härten dieser Zusammensetzung zu fördern und als Haftvermittler eine Mischung, die im wesentlichen besteht aus
(D) 0,1 bis 30 Gewichtsteilen einer ersten Organosiliciumverbindung, die sowohl siliciumgebundene ungesättigte Gruppen als auch siliciumgebundene Alkoxygruppen in jedem Molekül enthält,
(E) 0,1 bis 30 Gewichtsteilen einer zweiten Organosiliciumverbindung, die sowohl siliciumgebundene Epoxy- als auch siliciumgebundene Alkoxygruppen in jedem Molekül enthält und
(F) 0,001 bis 10 Gewichtsteilen einer Aluminiumverbindung oder Zirconiumverbindung ausgewählt aus Alkoxiden, Phenoxiden und Acyloxyverbindungen von Aluminium oder Zirconium, worin eine oder beide Alkoxy-, Phenoxy- oder Acyloxygruppen der Aluminiumverbindungen durch einen organischen Liganden ersetzt sein können.

## Revendications

1. Composition d'organosiloxanes, comprenant
(A) 100 parties en poids d'un organopolysiloxane ayant au moins 2 groupes alcényles inférieurs liés au silicium dans chaque molécule,
(B) de 0,3 à 40 parties en poids d'un organohydrogénosiloxane contenant au moins 2 atomes d'hydrogène liés au silicium dans chaque molécule ou d'un mélange d'au moins deux desdits organohydrogénosiloxanes, et
(C) une quantité d'un composé de type platine pour activer le durcissement de ladite composition ;
et, en tant que promoteur d'adhésion, un mélange essentiellement constitué de
(D) de 0,1 à 30 parties en poids d'un premier composé organosilicié contenant tant des groupes éthyléniquement insaturés liés au silicium que des groupes alcoxy liés au silicium dans chaque molécule,
(E) de 0,1 à 30 parties en poids d'un second composé organosilicié contenant tant des groupes époxy liés au silicium que des groupes alcoxy liés au silicium dans chaque molécule, et
(F) de 0,001 à 10 parties en poids d'un composé de l'aluminium ou d'un composé du zirconium choisi parmi les alcoxydes, les phénoxydes et les composés acyloxylés de l'aluminium ou du zirconium, dans lequel un ou deux des groupes alcoxy, phénoxy ou acyloxy des composés de l'aluminium peuvent être remplacés par un ligand organique.
